# EUROPÄISCHE PATENTSCHRIFT

(11) **EP 1 859 002 B1**
(45) Veröffentlichungstag und Bekanntmachung des Hinweises auf die Patenterteilung: **27.04.2011**
(21) Anmeldenummer: 06708473.1
(22) Anmeldetag: 23.02.2006
(51) Int. Cl.: C09K 5/20, C09K 5/10, C23F 11/10

(54) **GLYZERINHALTIGE GEFRIERSCHUTZMITTELKONZENTRATE MIT KORRISIONSSCHUTZ**
ANTIFREEZE CONCENTRATES COMPRISING GLYCERINE WITH CORROSION PROTECTION
CONCENTRÉS D'ANTIGEL CONTENANT DE LA GLYCÉRINE PROTÉGEANT CONTRE LA CORROSION

(30) Priorität: 28.02.2005 EP 05004305; 01.03.2005 EP 05004450
(43) Veröffentlichungstag der Anmeldung: 28.11.2007
(73) Patentinhaber: BASF SE, 67056 Ludwigshafen (DE)
(72) Erfinder: KORMANN, Claudius, 67105 Schifferstadt (DE); IRWIN, Colin,, Plumley Knutsford, Cheshire WA 16 0UH (GB); KIEFER, Matthias, 67071 Ludwigshafen (DE)
(86) Internationale Anmeldenummer: PCT/EP2006/060213
(87) Internationale Veröffentlichungsnummer: WO 2006/092376

(56) Entgegenhaltungen:
- EP-A- 1 010 740
- EP-A- 1 416 563
- WO-A-92/01029
- DE-A1- 10 163 337
- US-A- 2 388 155
- US-A- 4 000 079
- US-A1- 2002 171 063
- US-A1- 2003 198 847

## Beschreibung

Die vorliegende Erfindung betrifft Gefrierschutzmittel-/Korrosionsschutzkonzentrate, Verfahren zur Herstellung solcher Konzentrate aus Superkonzentraten, wässrige Kühlmittelzusammensetzungen aus diesen Konzentraten sowie deren Verwendung.

Kühlmittelzusammensetzungen für die Kühlkreisläufe von Verbrennungsmotoren von beispielsweise Automobilen enthalten meistens Alkylenglykole, hauptsächlich Ethylenglykol und/oder Propylenglykol, als Gefrierschutzkomponente.

Neben weiteren Komponenten sind insbesondere Korrosionsinhibitoren enthalten.

Insbesondere in modernen Verbrennungsmotoren werden Temperaturbelastungen erreicht, die hohe Anforderungen an die verwendeten Materialien stellen. Jede Art und jegliches Ausmaß von Korrosion stellen dabei einen potentiellen Risikofaktor dar, der zur Verkürzung der Laufzeit des Motors und zur Erniedrigung der Zuverlässigkeit führen kann. Weiterhin werden in modernen Motoren zunehmend eine Vielzahl von unterschiedlichen Materialien verwendet, beispielsweise Gusseisen, Kupfer, Messing, Weichlot, Stahl sowie Magnesium- und Aluminiumlegierungen. Durch diese Vielzahl an metallischen Materialien entstehen zusätzliche potentielle Korrosionsprobleme, insbesondere an den Stellen, an denen verschiedene Metalle in Kontakt miteinander stehen. Es können insbesondere an diesen Stellen vergleichsweise leicht die unterschiedlichsten Korrosionsarten auftreten, beispielsweise Lochfraßkorrosion, Spaltkorrosion, Erosion oder Kavitation.

Ebenso müssen die Kühlmittelzusammensetzungen auch mit nicht-metallischen Bestandteilen des Kühlkreislaufs, zum Beispiel Elastomeren und Kunststoffen aus Schlauchverbindungen oder Dichtungen verträglich sein und dürfen diese nicht verändern.

Weiterhin ist die Kühlmittelzusammensetzung bei der Wärmeübertragung in modernen Verbrennungsmotoren von entscheidender Bedeutung.

Neben Kühlmittelgebinden, die bereits die erwähnten gebrauchsfertigen Kühlmittelzusammensetzungen enthalten, sind Gefrierschutzmittel-/Korrosionsschutzkonzentrate von immer steigender Bedeutung. Diesen Konzentraten ist lediglich noch Wasser hinzuzufügen, um die gebrauchsfertigen Kühlmittelzusammensetzungen zu erhalten.

Gefrierschutzmittel-/Korrosionsschutzkonzentrate enthalten somit ebenfalls Komponenten, die zum einen dem Gefrierschutz dienen -also zur Gefrierpunktserniedrigung des Gemischs dienen- und zum anderen Korrosionsinhibitoren, die dem Korrosionsschutz dienen. Der Anteil der Korrosionsschutzkomponente am Konzentrat beträgt üblicherweise bis zu 10 Gew.-% bezogen auf die Gesamtmenge des Konzentrats. Der Anteil des Konzentrats am füllfertigen Kühlerschutzmittel beträgt üblicherweise 10 bis 60 Gew.%. Konzentrate können bereits geringe Mengen an Wasser enthalten.

Weiterhin sind Superkonzentrate insbesondere aus Transportgründen erhältlich, die eine verminderte Menge an Gefrierschutzkomponente, also meist Ethylenglykol, aufweisen, um ein möglichst kompaktes Gebinde bereitzustellen. Einem Konzentrat wird dabei meist soviel Menge an Gefrierschutzkomponente entzogen, dass die weiteren Bestandteile gerade noch in gelöster Form vorliegen.

Gefrierschutzmittel-/Korrosionsschutzkonzentrate sind daher aus Superkonzentraten durch Hinzumischen einer bestimmten Menge an Gefrierschutzkomponente und gegebenenfalls etwas Wasser erhältlich. Der Anteil des Superkonzentrats am Konzentrat beträgt üblicherweise 3 bis 60 Gew.-%.

Wie oben erwähnt bilden meistens Alkylenglykole, hauptsächlich Ethylenglykol und/oder Propylenglykol, die Hauptbestandteile der Gefrierschutzkomponente.

Die Korrosionsinhibitoren, die als Korrosionsschutzkomponente dienen, sind im Stand der Technik bekannt. Gefrierschutzmittel, die Carbonsäuren, Molybdate bzw. Triazole enthalten, sind aus DE-A 195 47 449, EP-B 552 988 oder US-A 4,561,990 bekannt.

EP-B 229 440 beschreibt eine Korrosionsschutzkomponente aus einer aliphatischen monobasischen Säure, einer dibasischen Kohlenwasserstoffsäure und einem Kohlenwasserstofftriazol.

Spezielle Säuren als Korrosionsschutzkomponente sind in EP-B 479 470 beschrieben. Quaternisierte Imidazole werden in DE-A 196 05 509 offenbart.

EP-A 816467 offenbart neben den üblicherweise verwendeten Ethylenglykol und Propylenglykol auch höhere Glykole und Glykolether als Gefrierschutzkomponente.

WO-A 92/01029 offenbart eine wässrige Kühlmittelzusammensetzung, die unter anderem Glycerin enthält.

EP-A 1416563 offenbart eine Kühlmittelzusammensetzung für Brennstoffzellen.

DE-A 10163337 offenbart Kühlerschutzmittel-Konzentrate und Kühlmittelzusammensetzungen mit verbessertem Korrosionsschutz.

US-A 2003 198847 offenbart Wärmeleitzusammensetzungen mit hoher elektrischer Widerstandsfähigkeit für Brennstoffzellen.

US-A 2388 155 offenbart Korrosionsschutzmittel für Metalle.

US-A 4 000 079 offenbart Korrosionsschutzmittel und korrosionshemmende Frostschutzmittel.

EP-A 1010740 offenbart konzentrierte und verdünnte Kühlflüssigkeiten.

Auch Glyzerin als Möglichkeit, als Bestandteil der Gefrierschutzkomponente eingesetzt zu werden, ist generell bekannt.

DE-A 3 413 416, US-A 2004/0104375 und WO-A 02/090462 erwähnen beispielsweise Glyzerin als mögliche Gefrierpunktserniedrigungskomponente neben den üblichen Glykolen, wie Ethylenglykol.

In WO-A 02/072728 wird auf die reduzierte Toxizität von Ethylenglykol-basierten Gefrierschutzkonzentraten durch Zusatz von geringen Mangen an Glyzerin hingewiesen.

Der mit den bisher bekannten Mischungen und Konzentraten erreichte Korrosionsschutz als auch die erzielbaren Gefrierpunkte sind im Allgemeinen gut. Dennoch ist auf Grund immer erhöhter Leistungsfähigkeit neuer Verbrennungsmotoren ein stetiger Bedarf an verbesserten Gefrierschutzmittel-/Korrosionsschutzkonzentraten.

Die Aufgabe der vorliegenden Erfindung besteht darin, derartige Gefrierschutzmittel-/Korrosionsschutzkonzentrate bereitzustellen, welche die Nachteile des Standes der Technik nicht oder zumindest in verringerter Form aufweisen. Diese Mischungen sollen ein ausgewogenes Verhältnis der Eigenschaften Korrosionsschutz, Wärmeübertragung und Frostbeständigkeit aufweisen.

Gefrierschutzmittel-/Korrosionsschutzkonzentrat enthaltend:
- Glyzerin, wobei die Menge an Glyzerin 15 bis 35 Gew.-% bezogen auf die Gesamtmenge des Konzentrats beträgt;
- Alkohole ausgewählt aus einwertige, zweiwertige, andere als Glyzerin dreiwertige Alkohle, Polyhydroxyalkohole, deren Ether oder Mischungen davon als Gefrierschutzkomponente, wobei die Summe der Mengen an Alkohol und Glyzerin mindestens 75 Gew.-% bezogen auf die Gesamtmenge des Konzentrats beträgt;
- eine Korrosionsschutzkomponente, wobei die Menge an Korrosionsschutzkomponente mindestens 1 Gew.-% bezogen auf die Gesamtmenge des Konzentrats beträgt.

Es wurde nämlich gefunden, dass durch die Verwendung eines bestimmten Mengenbereiches an Glyzerin im Konzentrat verbesserte Eigenschaften des Gefrierschutzmittel-/Korrosionsschutzkonzentrates erreicht werden kann.

Bevorzugt beträgt die Menge an Glycerin 20 bis 30 Gew.-%, bezogen auf die Gesamtmenge des Konzentrats.

Hierbei sind zusätzlich Alkohole ausgewählt aus einwertige, zweiwertige, andere als Glyzerin dreiwertige Alkohole, Polyhydroxyalkohole, deren Ether oder Mischungen davon als Gefrierschutzkomponente enthalten.

Zusätzliche Alkohole können Ethylenglykol, Propylenglykol, Diethylenglykol, Dipropylenglykol, Triethylenglykol, Tetraethylenglykol, Pentaethylenglykol, Hexaethylenglykol, Dipropylenglykol, Tripropylenglykol, Tetrapropylenglykol, Pentapropylenglykol, Hexapropylenglykol, Monoether von Glykolen wie der Methyl-, Ethyl-, Propyl- und Butylether von Ethylenglykol, Propylenglykol, Diethylenglykol und Dipropylenglykol sein. Bevorzugt sind Ethylenglykol und Propylenglykol. Besonders bevorzugt ist Ethylenglykol.

Unter dem Begriff "Propylenglykol" wird im Rahmen der vorliegenden Erfindung 1,2-Propandiol verstanden.

Die Menge an Gefrierschutzkomponente (Glyzerin und zusätzlicher Alkohol oder zusätzliche Alkohole) beträgt mindestens 75 Gew.-% bezogen auf die Gesamtmenge des Konzentrats. Bevorzugt beträgt die Menge mindestens 85 Gew.-%, besonders bevorzugt mindestens 90 Gew.-%.

Die Menge an Korrosionsschutzkomponente beträgt mindestens 1 Gew.-% bezogen auf die Gesamtmenge des Konzentrats. Bevorzugt beträgt die Menge mindestens 2 Gew.-%, besonders bevorzugt 3 bis 8 Gew.-%.

In einer bevorzugten Ausführungsform enthält ein Gefrierschutzmittel-/Korrosionsschutzkonzentrat nach der vorliegenden Erfindung zusätzlich mindestens eine der nachfolgenden Komponenten in einer jeweils angegebenen Menge bezogen auf die Gesamtmenge des Konzentrats:
(a) bis zu 5 Gew.-% einer oder mehrerer aliphatischer, cycloaliphatischer oder aromatischer Monocarbonsäuren mit jeweils 3 bis 16 C-Atomen in Form deren Alkalimetall-, Ammonium- oder substituierten Ammoniumsalze;
(b) bis zu 5 Gew.-% einer oder mehrerer aliphatischer oder aromatischer Di- oder Tricarbonsäuren mit jeweils 3 bis 21 C-Atomen in Form deren Alkalimetall-, Ammonium- oder substituierter Ammoniumsalze;
(c) bis zu 1 Gew.-% eines oder mehrerer Alkalimetallborate, Alkalimetallphosphate, Alkalimetallsilikate, Alkalimetallnitrite, Alkali- oder Erdalkalimetallnitrate, Alkalimetallmolybdate oder Alkali- oder Erdalkalimetallfluoride;
(d) bis zu 5 Gew.-% eines oder mehrerer aliphatischer, cycloaliphatischer oder aromatischer Amine mit 2 bis 15 C-Atomen, welche zusätzlich Ethersauerstoffatome oder Hydroxylgruppen enthalten können;
(e) bis zu 5 Gew.-% eines oder mehrerer ein- oder zweikerniger ungesättigter oder teilungesättigter Heterocyclen mit 4 bis 10 C-Atomen, welche benzanelliert sein und/oder zusätzliche funktionelle Gruppen tragen können;
(f) bis zu 5 Gew.-% eines oder mehrerer Tetra-(C₁-C₈-alkoxy)-silane (Orthokieselsäure-tetra-C₁-C₈-alkylester);
(g) bis zu 10 Gew.-% eines oder mehrerer Carbonsäure- oder Sulfonsäureamide;
(h) bis zu 1 Gew.-% eines oder mehrerer Hartwasserstabilisatoren auf Basis von Polyacrylsäure, Polymaleinsäure, Acrylsäure-Maleinsäure- Copolymeren, Polyvinylpyrrolidon, Polyvinylimidazol, Vinyl- pyrrolidon-Vinylimidazol-Copolymeren und/oder Copolymeren aus ungesättigten Carbonsäuren und Olefinen.

Bei den Verbindungen der Gruppen a) bis g) handelt es sich in der Regel um Korrosionsinhibitoren.

Als lineare oder verzweigtkettige aliphatische oder cycloaliphatische Monocarbonsäuren (a) kommen beispielsweise Propionsäure, Pentansäure, Hexansäure, Cyclohexylessigsäure, Octansäure, 2-Ethylhexansäure, Nonansäure, Isononansäure, Decansäure, Undecansäure oder Dodecansäure in Betracht. Als aromatische Monocarbonsäure (a) eignet sich insbesondere Benzoesäure, daneben kommen auch beispielsweise C₁- bis C₈-Alkylbenzoesäuren, wie o-, m-, p-Methylbenzoesäure oder p-tert.-Butylbenzoesäure sowie hydroxylgruppenhaltige aromatische Monocarbonsäuren wie o-, m-, oder p- Hydroxybenzoesäure, o-, m- oder p- (Hydroxymethyl)benzoesäure oder Halogenbenzoesäuren wie o-, m- oder p-Fluorbenzoesäure in Betracht.

Typische Beispiele für Di- oder Tricarbonsäuren (b) sind Malonsäure, Bernsteinsäure, Glutarsäure, Adipinsäure, Pimelinsäure, Korksäure, Azelainsäure, Sebacinsäure, Undecandisäure, Dodecandisäure, Dicyclopentadiendicarbonsäure, Phthalsäure, Terephthal- säure und Triazin-triiminocarbonsäuren wie 6,6',6"-(1,3,5-Triazin-2,4,6-triyltriimino)-trihexansäure.

Alle genannten Carbonsäuren der Gruppen (a) und (b) liegen als Alkalimetallsalze, vor allem als Natrium- oder Kaliumsalze, oder als Ammoniumsalze oder substituierte Ammoniumsalze (Aminsalze) vor, z. B. mit Ammoniak, Trialkylaminen oder Trialkanolaminen.

Typische Beispiele für unter (c) genannte Korrosionsinhibitoren sind Natriumtetraborat (Borax), Dinatriumhydrogenphosphat, Trinatriumphosphat, Natriummetasilikat, Natriumnitrit, Natriumnitrat, Magnesiumnitrat, Natriumfluorid, Kaliumfluorid, Magnesium- fluorid und Natriummolybdat.

Bei Mitverwendung von Alkalimetallsilikaten werden diese zweckmäßigerweise durch übliche Organosilicophosphonate oder Organosilicosulfonate in üblichen Mengen stabilisiert.

Als aliphatische, cycloaliphatische oder aromatische Amine (d) mit 2 bis 15, vorzugsweise 4 bis 8 C-Atomen, welche zusätzlich Ethersauerstoffatome, insbesondere 1 bis 3 Ethersauerstoffatome, oder Hydroxylgruppen, insbesondere 1 bis 3 Hydroxylgruppen, enthalten können, kommen beispielsweise Ethylamin, Propylamin, Isopropylamin, n-Butylamin, Isobutylamin, sec.-Butylamin, tert.-Butylamin, n-Pentylamin, n-Hexylamin, n-Heptylamin, n-Octylamin, Isononylamin, Di-n-propylamin, Diisopropylamin, Di-n-butylamin, Mono-, Di- und Triethanolamin, Piperidin, Morpholin, Anilin oder Benzylamin in Frage. Aliphatische und cycloaliphatische Amine (d) sind in der Regel gesättigt.

Bei den Heterocyclen (e) handelt es sich beispielsweise um einkernige fünf- oder sechsgliedrige Systeme mit 1, 2 oder 3 Stickstoffatomen oder mit einem Stickstoffatom und einem Schwefelatom, welche benzanelliert sein können. Es können auch zweikernige Systeme aus fünf- und/oder sechsgliedrigen Teilringen mit typischerweise 2, 3, oder 4 Stickstoffatomen eingesetzt werden.

Die Heterocyclen (e) können zusätzlich funktionelle Gruppen, vorzugsweise C₁-C₄-Alkoxy, Amino und/oder Mercapto, tragen. Das heterocyclische Grundgerüst kann selbstverständlich auch Alkylgruppen, insbesondere C₁-C₄-Alkylgruppen, tragen.

Typische Beispiele für Heterocyclen (e) sind Benzotriazol, Tolutriazol (Tolyltriazol), hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Für die Tetra-(C₁-C₈-Alkoxy)-Silane (f) kommen beispielsweise Tetramethoxysilan, Tetraethoxysilan, Tetra-n-propoxysilan oder Tetra-n-butoxysilan in Frage.

Die Amide (g) können gegebenenfalls am Stickstoffatom der Amidgruppe alkylsubstituiert sein, beispielsweise durch eine C₁-C₄-Alkylgruppe. Aromatische oder heteroaromatische Grundgerüste des Moleküls können selbstverständlich auch derartige Alkylgruppen tragen. Im Molekül können eine oder mehrere, vorzugsweise eine oder zwei Amidgruppen vorliegen. Die Amide können zusätzliche funktionelle Gruppen, vorzugsweise C₁-C₄-Alkoxy, Amino, Chlor, Fluor, Hydroxy und/oder Acetyl tragen, insbesondere finden sich solche funktionelle Gruppen als Substituenten an vorhandenen aromatischen oder heteroaromatischen Ringen.

Typische Beispiele für derartige Carbonsäure- und Sulfonsäureamide der Gruppe (g) sind in der DE-A 100 36 031 aufgeführt.

Insbesondere typische Beispiele für derartige Carbonsäure- und Sulfonsäureamide der Gruppe (g) sind nachfolgend aufgeführt.
- aromatische Carbonsäureamide:
   Benzamid, 2-Methylbenzamid, 3-Methylbenzamid, 4-Methylbenzamid, 2,4-Dimethylbenzamid, 4-tert.-Butylbenzamid, 3-Methoxybenzamid, 4-Methoxybenzamid, 2-Aminobenzamid (Anthranilsäureamid), 3-Aminobenzamid, 4-Aminobenzamid, 3-Amino-4-methylbenzamid, 2-Chlorbenzamid, 3-Chlorbenzamid, 4-Chlorbenzamid, 2-Fluorbenzamid, 3-Fluorbenzamid, 4-Fluorbenzamid, 2,6-Difluorbenzamid, 4-Hydroxybenzamid, Phthalsäurediamid, Terephthalsäurediamid;
- heteroaromatische Carbonsäureamide:
   Nicotinsäureamid (Pyridin-3-carbonsäureamid), Picolinsäureamid (Pyridin-2-carbonsäureamid);
- aliphatische Carbonsäureamide:
   Bernsteinsäurediamid, Adipinsäurediamid, Propionsäureamid, Hexansäureamid;
- cycloaliphatische Carbonsäureamide mit der Amidgruppierung als Bestandteil des Ringes:
   2-Pyrrolidon, N-Methyl-2-pyrrolidon, 2-Piperidon, ε-Caprolactam;
- aliphatische Sulfonsäureamide:
   Methansulfonsäureamid, Hexan-1-sulfonsäureamid;
- aromatische Sulfonsäureamide:
   Benzolsulfonsäureamid, o-Toluolsulfonsäureamid, m-Toluolsulfonsäureamid, p-Toluolsulfonsäureamid, 4-tert.-Butylbenzolsulfonsäureamid, 4-Fluorbenzolsulfonsäureamid, 4-Hydroxybenzolsulfonsäureamid, 2-Aminobenzolsulfonsäureamid, 3-Aminobenzolsulfon-säureamid, 4-Aminobenzolsulfonsäureamid, 4-Acetylbenzolsulfonsäureamid.

Zusätzlich zu der genannten Korrosionsschutzkomponente der Gruppen (a) bis (g) können beispielsweise auch noch lösliche Salze des Magnesiums von organischen Säuren, z. B. Magnesiumbenzolsulfonat, Magnesiumethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Von den oben aufgeführten zusätzlichen Inhaltsstoffen der erfindungsgemäßen Gefrierschutzmittel-/Korrosionsschutzkonzentrate werden vorzugsweise Carbonsäuren der Gruppen (a) und/oder (b) und/oder Heterocyclen der Gruppe (e) mit verwendet.

In einer besonders bevorzugten Ausführungsform enthalten die erfindungsgemäßen Gefrierschutzmittel-/Korrosionsschutzkonzentrat jeweils zusätzlich bis 5 Gew.-%, insbesondere 0,5 bis 3 Gew.-%, zweier voneinander verschiedener Carbonsäuren aus den Gruppen (a) und/oder (b) sowie 0,05 bis 5 Gew.-%, insbesondere 0,1 bis 0,5 Gew.-%, eines oder mehrerer Heterocyclen aus der Gruppe (e).

Als derartige voneinander verschiedene Carbonsäuren können beispielsweise Mischungen aus einer aliphatischen Monocarbonsäure und einer aliphatischen Dicarbonsäure, aus einer aromatischen Monocarbonsäure und einer aliphatischen Dicarbonsäure, aus einer aliphatischen Monocarbonsäure und einer aromatischen Monocarbonsäure, aus zwei aliphatischen Monocarbonsäuren oder aus zwei aliphatischen Dicarbonsäuren eingesetzt werden. Als hierbei vorzugsweise mit zu verwendende Heterocyclen eignen sich insbesondere Benzotriazol und Tolutriazol.

Der pH-Wert der erfindungsgemäßen Gefrierschutzmittelkonzentrate liegt üblicherweise im Bereich von 4 bis 11, vorzugsweise 4 bis 10, insbesondere 4,5 bis 8,5. Dabei kann der gewünschte pH-Wert gegebenenfalls auch durch Zugabe von Alkalimetallhydroxid, Ammoniak oder Aminen zur Formulierung eingestellt, festes Natrium- oder Kaliumhydroxid sowie wässrige Natron- oder Kalilauge sind hierfür besonders geeignet.

Vorzugsweise mit zu verwendende Carbonsäuren werden zweckmäßigerweise gleich als entsprechende Alkalimetallsalze zugegeben, um automatisch im gewünschten pH-Bereich zu liegen. Man kann die Carbonsäuren jedoch auch als freie Säuren zufügen und dann mit Alkalimetallhydroxid, Ammoniak oder Aminen neutralisieren und den gewünschten pH-Bereich einstellen.

Als weitere übliche Hilfsmittel können die erfindungsgemäßen Gefrierschutzmittel-/Korrosionsschutzkonzentrat in üblichen geringen Mengen noch Entschäumer (in der Regel in Mengen von 0,003 bis 0,008 Gew.-%) sowie aus Gründen der Hygiene und der Sicherheit im Falle eines Verschluckens Bitterstoffe (z. B. vom Typ Denatoniumbenzoat) und Farbstoffe enthalten.

Die erfindungsgemäßen Gefrierschutzmittel-/Korrosionsschutzkonzentrate können durch einfaches Mischen der einzelnen Komponenten hergestellt werden.

Es können die erfindungsgemäßen Konzentrate auch aus beispielsweise kommerziell erhältlichen Superkonzentraten hergestellt werden.

Demzufolge ist ein weiterer Gegenstand der vorliegenden Erfindung ein Verfahren zur Herstellung eines Gefrierschutzmittel-/Korrosionsschutzkonzentrats den Schritt enthaltend
Vermischen eines Gefrierschutzmittelsuperkonzentrats enthaltend Korrosionsinhibitoren mit einer Glyzerinkomponente, wobei die Komponente Glyzerin in einer Menge aufweist, die im resultierenden Gemisch 15 bis 35 Gew.-% bezogen auf die Gesamtmenge des Gemischs ergibt und wobei das resultierende Gemisch ein erfindungsgemäßes Gefrierschutzmittel-/Korrosionsschutzkonzentrat ergibt.

Hierbei liegt das Gewichtsverhältnis Superkonzentrat zu Glyzerinkomponente vorzugsweise im Bereich von 5:1 bis 1:50. Mehr bevorzugt liegt diese im Bereich von 1:1 bis 1:20.

Die Menge an Glyzerin beträgt mindestens 15 Gew.-%, besonders bevorzugt mindestens 20 Gew.-%, bezogen auf die Gesamtmenge der Glyzerinkomponente. Weitere Bestandteile können übliche Bestandteile der Gefrierschutzkomponente, vorzugsweise Ethylenglykol, und Wasser sein.

Gegenstand der vorliegenden Erfindung sind auch wässrige Kühlmittelzusammensetzungen mit einem erniedrigten Gefrierpunkt, insbesondere für den Kühlerschutz von Verbrennungsmotoren im Automobilbereich, welche Wasser und 10 bis 90 Gew.-%, insbesondere 20 bis 60 Gew.-% der erfindungsgemäßen Gefrierschutzmittel-/Korrosionsschutzkonzentrate umfassen.

Ein weiterer Gegenstand der vorliegenden Erfindung ist die Verwendung von erfindungsgemäßen Kühlmittelzusammensetzungen in Anlagen, wo der Frostschutz von Wasser (in der Regel für den Bereich von 0°C bis -40°C, insbesondere -20°C bis -35°C) und gleichzeitig der Korrosionsschutz von Metallgehäusen von Wasser enthaltenden Behältern sichergestellt werden sollen. Hier sind vor allem die Kühlkreisläufe von Verbrennungsmotoren, insbesondere in Automobilen wie Personen- und Lastkraftwagen, von Interesse. Die erfindungsgemäßen Kühlmittelzusammensetzungen können aber auch in Standmotoren, in Warmwasserkreisläufen von Zentralheizungen, in durch Widerstände beheizten Radiatoren, in Solarstromkreisen aber auch in durch Kältemittel gekühlten Kreislaufanlagen verwendet werden.

### Beispiele

Bei den in den nachfolgenden Beispielen aufgeführten Kühlerschutzmitteln HK1, HK2 und HK3 handelt es sich um handelsübliche typische Superkonzentrate, welche ein umfassend erprobtes und bewährtes Eigenschaftsprofil aufweisen. Durch die Beimischung von Glyzerin in erfindungsgemäßen Anteilen wird dieses Eigenschaftsprofil weiter verbessert.

### Beispiel 1 Bestimmung des Eisflockungspunktes von HK1 mit/ohne Glyzerin

HK1 ist eine Mischung aus 32,6 Teilen Ethylenglykol, 26,9 Teilen wässrige Kaliumhydroxid Lösung (50 Gew.-%), 33 Teilen Ethylhexansäure, 2,2 Teilen Natriummolybdat-dihydrat, 2,4 Teilen Tolutriazol, 2,8 Teilen Wasser sowie Hilfsstoffen (<0,2 Teile).

| | HK1 mit Glyzerin Gew.-% | HK1 ohne Glyzerin Gew.-% | Spezifikation: British Standard BS6580 |
|---|---|---|---|
| HK1 | 7 | 7 | |
| Glyzerin | 25 | --- | |
| Ethylenglykol | 66 | 91 | |
| Wasser | 2 | 2 | |
| Eisflockenpunkt, ASTM D 1177 Konzentration, 50 Vol.-% | -36,0°C | -37,5°C | <-33°C |

Der Vergleich zeigt, dass Glyzerin als Gefrierschutzkomponente in Abmischung mit Ethylenglykol einen spezifikationsgerechten Gefrierschutz ermöglicht.

### Beispiel 2 Heat Transfer Corrosion Test von HK1 mit/ohne Glyzerin

Der Test wird gemäß ASTM D 4340 mit HK1 mit/ohne Glyzerin in der Zusammensetzung wie in Beispiel 1 bei einer Konzentration von 25 Vol.-% (Wassersorte: ASTM D 4340) durchgeführt.

| Prüfmetall Gußaluminium | Gewichtsänderung mg/cm² | Aussehen des Metalls |
|---|---|---|
| HK1 mit Glyzerin | -0,05 | Grau angelaufen, geringe Beläge |
| HK1 ohne Glyzerin | +0,30 | Hell angelaufen |
| Spezifikation British Standard BS6580 | < 1 | Keine Angaben |

Der Vergleich zeigt, dass die Glyzerin enthaltende Mischung zu einem besseren Korrosionsergebnis führt, weil die Gewichtsveränderung des Aluminiumprüfkörpers geringer ist.

### Beispiel 3 Dynamischer Korrosionsversuch in der Heißkorrosions-Umlaufapparatur

Die Heißkorrosions-Umlaufapparatur ist analog der bekannten Apparatur gemäß FW Heft R 443 1986 aufgebaut. Sofern Modifikationen gegenüber der FW Apparatur und Versuchsführung gewählt werden, so sind sie aus der nachfolgenden tabellarischen Übersicht ersichtlich. Für den Zweck der vorliegenden Erfindung wurde die verschärfte Betriebsart HK 96h ausgewählt.

| Spezifikation | HK 96h | FW Heft R 443 1986 |
|---|---|---|
| Temperatur der Prüfflüssigkeit: | | |
| Eingangs-Heißkammer, °C | 95 | 80 |
| Ausgangs-Heißkammer, °C | 105 | - |
| Überdruck, bar | 1,5 | 1,5 |
| Durchfluss, 1/h | 210 | 260 |
| Laufzeit, h | 96 | 30 |
| Volumen der Prüfflüssigkeit, I | 1 | 2,3 |
| Heizleistung, W | 2300 | 1500 |
| Theoretische Heizflächenbelastung, W/cm² | 75 | 50 |
| Werkstoffproben | GALSi6Cu4 (Gewicht ca. 65 g) | GG-26 GAlSi10Mgwa |
| Konzentration der Prüfflüssigkeit, Vol.-% | 30 | 20/40 |
| Wassersorte | ASTM D1384 | 10°dGH |

Es wurde ein Metallpaket zusammengeschraubt, welches wie in der ASTM D1384 gefertigt ist. Es wurde fallweise in den Behälter Testflüssigkeit eingebracht, so dass es von der heißen Prüfflüssigkeit umspült wird. Das Metallpaket bestand aus den folgenden Metallen und Legierungen, wobei die Reihenfolge der ASTM D1384 beachtet wird, und die zusätzlichen Metalle wurden neben das Aluminium geschraubt. Das Metallpaket bestand aus Legierungen:
Kupfer F-CU, Weichlot LPbSn30(Sb), Messing Ms - 63, Stahl II, Grauguss GG - 26, G-ALSi6Cu4, ALMn, AL 99,5, G-ALSi12.

Die Metalle wurden in üblicher Weise (also wie in ASTM D1384 oder FVV R443 1986) behandelt. Die Gewichtsveränderungen wurden -wenn nicht anders angegeben- nach dem Beizen registriert.

### Beispiel 4 Dynamischer Korrosionsversuch mit HK2 mit/ohne Glyzerin

Der Versuch wurde wie in Beispiel 3 angegeben durchgeführt.

HK2 ist eine Mischung aus 87,8 Teilen Ethylenglykol, 5,4 Teilen wäßrige Natriumhydroxid Lösung (50 Gew.-%), 1,3 Teilen Adipinsäure, 5,0 Teilen Sebacinsäure, 0,4 Teilen Tolutriazol, sowie Hilfsstoffen (<0,2 Teile).

| | HK2 mit Glyzerin | HK2 ohne Glyzerin |
|---|---|---|
| Mischung (180g) | 100 g HK2 | 100 g HK2 |
| | 38 g Ethylenglykol | 80 g Ethylenglykol |
| | 42 g Glyzerin | |
| Gewichtsveränderung des Aluminiumprüflings (Rundprobe) HK96h KV23922 | 13 mg | 36 mg |

Der Vergleich zeigt, dass die Glyzerin enthaltende Mischung zu einem besseren Korrosionsergebnis führt, weil die Gewichtsveränderung des Aluminiumprüfkörpers nach 96 h Versuchsdauer geringer ist.

### Beispiel 5 Dynamischer Korrosionsversuch mit HK3 mit/ohne Glyzerin

Der Versuch wurde wie in Beispiel 3 angegeben durchgeführt.

HK3 ist eine Mischung aus 81,5 Teilen Ethylenglykol, 5,9 Teilen wäßrige Natriumhydroxid Lösung (50 Gew.-%), 5,4 Teilen Ethylhexansäure, 3,1 Teilen Sebacinsäure, 0,03 Teilen stabilisiertem Silikat, 2,7 Teilen Borax, 0,3 Teilen Benzotriazol, 0,7 Teilen Natriumnitrat sowie Hilfsstoffen (<0,4 Teile).

| | HK3 mit Glyzerin | HK3 ohne Glyzerin |
|---|---|---|
| Mischung (270g) | 100 g HK3 | 100 g HK3 |
| | 107 g Ethylenglykol | 170 g Ethylenglykol |
| | 63 g Glyzerin | |
| Temperaturveränderung des Aluminiumprüflings (Rundprobe) HK96h KV23931 | 1°C | 5°C |

Der Vergleich zeigt, dass die Glyzerin enthaltende Mischung zu einem besseren Korrosionsergebnis führt, weil die Temperaturerhöhung des Aluminiumprüfkörpers nach 96 h Versuchsdauer geringer ist.

## Patentansprüche

1. Gefrierschutzmittel-/Korrosionsschutzkonzentrat enthaltend
- Glyzerin, wobei die Menge an Glyzerin 15 bis 35 Gew.-% bezogen auf die Gesamtmenge des Konzentrats beträgt;
- Alkohole ausgewählt aus einwertige, zweiwertige, andere als Glyzerin dreiwertige Alkohole, Polyhydroxyalkohole, deren Ether oder Mischungen davon als Gefrierschutzkomponente, wobei die Summe der Mengen an Alkohol und Glyzerin mindestens 75 Gew.-% bezogen auf die Gesamtmenge des Konzentrats beträgt;
- eine Korrosionsschutzkomponente, wobei die Menge an Korrösionsschutzkomponente mindestens 1 Gew.-% bezogen auf die Gesamtmenge des Konzentrats beträgt.

2. Konzentrat nach Anspruch 1, **dadurch gekennzeichnet, dass** zusätzlich mindestens eine der nachfolgenden Komponenten in einer jeweils angegebenen Menge bezogen auf die Gesamtmenge des Konzentrats enthalten ist:
(a) bis zu 5 Gew.-% einer oder mehrerer aliphatischer, cycloaliphatischer oder aromatischer Monocarbonsäuren mit jeweils 3 bis 16 C-Atomen in Form deren Alkalimetall-, Ammonium- oder substituierten Ammoniumsalze;
(b) bis zu 5 Gew.-% einer oder mehrerer aliphatischer oder aromatischer Di- oder Tricarbonsäuren mit jeweils 3 bis 21 C-Atomen in Form deren Alkalimetall-, Ammonium- oder substituierter Ammoniumsalze;
(c) bis zu 1 Gew.-% eines oder mehrerer Alkalimetallborate, Alkalimetallphosphate, Alkalimetallsilikate, Alkalimetallnitrite, Alkali- oder Erdalkalimetallnitrate, Alkalimetallmolybdate oder Alkali- oder Erdalkalimetallfluoride;
(d) bis zu 5 Gew.-% eines oder mehrerer aliphatischer, cycloaliphatischer oder aromatischer Amine mit 2 bis 15 C-Atomen, welche zusätzlich Ethersauerstoffatome oder Hydroxylgruppen enthalten können;
(e) bis zu 5 Gew.-% eines oder mehrerer ein- oder zweikerniger ungesättigter oder teilungesättigter Heterocyclen mit 4 bis 10 C-Atomen, welche benzanelliert sein und/oder zusätzliche funktionelle Gruppen tragen können;
(f) bis zu 5 Gew.-% eines oder mehrerer Tetra-(C₁-C₈-alkoxy)-silane (Orthokieselsäure-tetra-C₁-C₈-alkylester);
(g) bis zu 10 Gew.-% eines oder mehrerer Carbonsäure- oder Sulfonsäureamide;
(h) bis zu 1 Gew.-% eines oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

3. Konzentrat nach Anspruch 1 oder 2, **dadurch gekennzeichnet, dass** der pH-Wert des Konzentrats im Bereich von 4 bis 11 liegt.

4. Verfahren zur Herstellung eines Gefrierschutzmittel-/Korrosionsschutzkonzentrats den Schritt enthaltend
Vermischen eines Gefrierschutzmittelsuperkonzentrats enthaltend Korrosionsinhibitoren mit einer Glyzerinkomponente, wobei die Komponente Glyzerin in einer Menge aufweist, die im resultierenden Gemisch 15 bis 35 Gew.-% bezogen auf die Gesamtmenge des Gemischs ergibt und wobei das resultierende Gemisch eine Gefrierschutzmittel-/Korrosionsschutzkonzentrat nach einem der Ansprüche 1 bis 3 ergibt.

5. Wässrige Kühlmittelzusammensetzung enthaltend 10 bis 90 Gew.-% eines Konzentrats nach einem der Ansprüche 1 bis 3.

6. Verwendung einer Kühlmittelzusammensetzung nach Anspruch 5 in Anlagen, wo der Frostschutz von Wasser und gleichzeitig der Korrosionsschutz von Metallgehäusen von Wasser enthaltenden Behältern sichergestellt werden sollen.

## Claims

1. An antifreeze/anticorrosion concentrate comprising
- glycerol, the amount of glycerol being from 15 to 35% by weight based on the total amount of the concentrate;
- alcohols selected from monohydric alcohols, dihydric alcohols, trihydric alcohols other than glycerol, polyhydroxy alcohols, ethers thereof or mixtures thereof as the antifreeze component, the sum of the amounts of alcohol and glycerol being at least 75% by weight based on the total amount of the concentrate;
- an anticorrosion component, the amount of anticorrosion component being at least 1% by weight based on the total amount of the concentrate.

2. The concentrate according to claim 1, which additionally comprises at least one of the following components in an amount specifies in each case, based on the total amount of the concentrate:
(a) up to 5% by weight of one or more aliphatic, cycloaliphatic or aromatic monocarboxylic acids having in each case from 3 to 16 carbon atoms in the form of their alkali metal, ammonium or substituted ammonium salts;
(b) up to 5% by weight of one or more aliphatic or aromatic di- or tricarboxylic acids having in each case from 3 to 21 carbon atoms in the form of their alkali metal, ammonium or substituted ammonium salts;
(c) up to 1% by weight of one or more alkali metal borates, alkali metal phosphates, alkali metal silicates, alkali metal nitrites, alkali metal or alkaline earth metal nitrates, alkali metal molybdates or alkali metal or alkaline earth metal fluorides;
(d) up to 5% by weight of one or more aliphatic, cycloaliphatic or aromatic amines which have from 2 to 15 carbon atoms and may additionally comprise ether oxygen atoms or hydroxyl groups;
(e) up to 5% by weight of one or more mono- or bicyclic, unsaturated or partly unsaturated heterocycles which have from 4 to 10 carbon atoms and may be benzofused and/or bear additional functional groups;
(f) up to 5% by weight of one or more tetra(C₁-C₈-alkoxy)silanes (tetra-C₁-C₈-alkyl orthosilicates);
(g) up to 10% by weight of one or more carboxamides or sulfonamides;
(h) up to 1% by weight of one or more hard water stabilizers based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

3. The concentrate according to claim 1 or 2, wherein the pH of the concentrate is in the range from 4 to 11.

4. A process for preparing an antifreeze/anticorrosion concentrate, comprising the step of
mixing an antifreeze superconcentrate comprising corrosion inhibitors with a glycerol component, the component comprising glycerol in an amount which results in from 15 to 35% by weight based on the total amount of the mixture in the resulting mixture and the resulting mixture giving rise to an antifreeze/anticorrosion concentrate according to any of claims 1 to 3.

5. An aqueous coolant composition comprising from 10 to 90% by weight of the concentrate according to any of claims 1 to 3.

6. The use of the coolant composition according to claim 5 in systems where the frost protection of water and simultaneously the corrosion protection of metal casings of water-comprising vessels are to be ensured.

## Revendications

1. Concentré d'antigel/anticorrosion contenant
- de la glycérine, la quantité de glycérine étant de 15 à 35% en poids par rapport à la quantité totale du concentré ;
- des alcools choisis parmi les alcools monovalents, bivalents, trivalents autres que la glycérine, les polyhydroxyalcools, leurs éthers ou leurs mélanges en tant que composant antigel, la somme des quantités d'alcool et de glycérine étant d'au moins 75% en poids par rapport à la quantité totale du concentré ;
- un composant anticorrosion, la quantité du composant anticorrosion étant d'au moins 1 % en poids par rapport à la quantité totale du concentré.

2. Concentré selon la revendication 1, **caractérisé en ce qu'**au moins un des composants suivants est également contenu en une quantité donnée à chaque fois par rapport à la quantité totale du concentré :
(a) jusqu'à 5 % en poids d'un ou de plusieurs acides monocarboxyliques aliphatiques, cycloaliphatiques ou aromatiques contenant à chaque fois 3 à 16 atomes C sous la forme de leurs sels de métaux alcalins, d'ammonium ou d'ammonium substitués ;
(b) jusqu'à 5% en poids d'un ou de plusieurs acides di- ou tricarboxyliques aliphatiques ou aromatiques contenant à chaque fois 3 à 21 atomes C sous la forme de leurs sels de métaux alcalins, d'ammonium ou d'ammonium substituées ;
(c) jusqu'à 1% en poids d'un ou de plusieurs borates de métaux alcalins, phosphates de métaux alcalins, silicates de métaux alcalins, nitrites de métaux alcalins, nitrates de métaux alcalins ou alcalino-terreux, molybdates de métaux alcalins ou fluorures de métaux alcalins ou alcalino-terreux ;
(d) jusqu'à 5 % en poids d'une ou de plusieurs amines aliphatiques, cycloaliphatiques ou aromatiques contenant 2 à 15 atomes C, qui peuvent également convenir des atomes d'oxygène éthériques ou des groupes hydroxyle ;
(e) jusqu'à 5% en poids d'un ou de plusieurs hétérocycles mono- ou binucléaires insaturés ou partiellement insaturés contenant 4 à 10 atomes C, qui peuvent être benzocondensés et/ou porter des groupes fonctionnels supplémentaires ;
(f) jusqu'à 5 % en poids d'un ou de plusieurs tétra-(alcoxy en C₁-C₈)-silanes (esters tétraalkyliques en C₁-C₈ de l'acide orthosilicique) ;
(g) jusqu'à 10 % en poids d'un ou de plusieurs amides d'acides carboxyliques ou d'acides sulfoniques ;
(h) jusqu'à 1 % en poids d'un ou de plusieurs stabilisateurs de la dureté de l'eau à base d'acide polyacrylique, d'acide polymaléique, de copolymères acide acrylique-acide maléique, de polyvinylpyrrolidone, de polyvinylimidazol, de copolymères vinylpyrrolidone-vinylimidazol et/ou de copolymères d'acides carboxyliques insaturés et d'oléfines.

3. Concentré selon la revendication 1 ou 2, **caractérisé en ce que** le pH du concentré est dans la plage allant de 4 à 11.

4. Procédé de fabrication d'un concentré d'antigel/anticorrosion comprenant l'étape
le mélange d'un superconcentré d'antigel contenant des inhibiteurs de corrosion avec un composant glycérine, le composant comprenant de la glycérine en une quantité qui donne dans le mélange résultant 15 à 35 % en poids par rapport à la quantité totale du mélange et le mélange résultant donnant un concentré d'antigel/anticorrosion selon l'une quelconque des revendications 1 à 3.

5. Composition aqueuse d'agent de refroidissement contenant 10 à 90 % en poids d'un concentré selon l'une quelconque des revendications 1 à 3.

6. Utilisation d'une composition d'agent de refroidissement selon la revendication 5 dans des installations où la protection contre le gel d'eau et simultanément la protection contre la corrosion de boîtiers métalliques de récipients contenant de l'eau doivent être assurées.
